(19)

Europäisches
Patentamt
European
Patent Office
Office européen
des brevets

(11) **EP 3 312 787 A1**

(12) **EUROPEAN PATENT APPLICATION**
published in accordance with Art. 153(4) EPC

(43) Date of publication:
**25.04.2018 Bulletin 2018/17**

(51) Int Cl.:
**G06Q 20/40** (2012.01)

(21) Application number: **16810957.7**

(22) Date of filing: **12.06.2016**

(86) International application number:
**PCT/CN2016/085401**

(87) International publication number:
**WO 2016/202216 (22.12.2016 Gazette 2016/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.06.2015 CN 201510347516**

(71) Applicant: **Alibaba Group Holding Limited
Grand Cayman (KY)**

(72) Inventors:
• **JIN, Hong**
**Hangzhou 310099 (CN)**
• **FEI, Binjie**
**Hangzhou 310099 (CN)**

(74) Representative: **Conroy, John
Fish & Richardson P.C.
Highlight Business Towers
Mies-van-der-Rohe-Straße 8
80807 München (DE)**

(54) **METHOD AND DEVICE FOR OBTAINING PAYMENT THRESHOLD**

(57) Embodiments of the present application provide a method and device for obtaining a payment threshold. The method for obtaining a payment threshold includes: obtaining a known first payment threshold of a user at a first moment; determining a payment threshold variation between a second moment and the first moment according to a pre-obtained payment threshold change rule; determining a payment threshold of the user at the second moment according to the first payment threshold and the payment threshold variation, wherein the payment threshold change rule is obtained after data processing is performed on historical transaction data of the user at different moments. The method achieves automatic obtaining of a payment threshold. Also, an operator does not need to frequently log onto the back-end to frequently interact with a back-end server, thus improving the efficiency of obtaining a payment threshold.

Obtain a known first payment threshold of a user at a first moment — 101

Determine a payment threshold variation between a second moment and the first moment according to a pre-obtained payment threshold change rule, wherein the payment threshold change rule is obtained after data processing is performed on historical transaction data of the user at different moments — 102

Determine a payment threshold of the user at the second moment according to the first payment threshold and the payment threshold variation — 103

**FIG. 1**

EP 3 312 787 A1

## Description

The present application claims priority to Chinese Patent Application No. 201510347516.8 filed on June 19, 2015 and entitled " METHOD AND DEVICE FOR OBTAINING PAYMENT THRESHOLD", which is incorporated herein by reference in its entirety.

## Technical field

The present application relates to the field of data processing technologies, and in particular, to a method for obtaining a payment threshold and a device for obtaining a payment threshold.

## Backgroundart

Nowadays, there are certain transaction risks, which mainly include card theft and account theft, when people use some payment tools to carry out transactions. A card thief usually obtains bank card information (including a user name of the card, a card number, a certificate of the card, a mobile phone of the card, a mobile phone check code of the card, and so on) of a member/non-member, and purchases real goods, virtual commodities and the like or transfer balance to an account or a card by means of fast sign-up payment, non-deposit payment, or the like. An account thief usually illegally obtains a login password and a payment password, and then transfers the balance in a member account/Yu'E Bao balance and the balance of a signed bank card to an account/a card, or purchasesreal goods or virtual commodities.

In the prior art, a payment threshold may be set to identify these transaction risks. For example, when a payment amount of the current transaction is equal to or exceeds the payment threshold, a user is reminded to determine whether to carry out the transaction, so as to avoid the aforementioned transaction risks as far as possible. However, in the existing solution, to obtain the payment threshold, it is first necessary to obtain historical transaction data of the user, and then carry out analysis and determination according to historical transaction information of the user, anempirical value and the like. An operator further needs to periodically check an auditing amount of the risk, continuously repeat the foregoing process of obtaining a payment threshold according to the auditing result, and update the payment threshold in time to achieve a balance between transaction risks and interruptions to the user. In this process, the operator needs to frequently log onto the back-end and to frequently interact with a back-end server each time the payment threshold is acquired. This method for obtaining a payment threshold is relatively low in efficiency.

## Summary of the Invention

A technical problem to be solved by embodiments of the present application is to provide a method for obtaining a payment threshold, which can improve the efficiency of obtaining a payment threshold.

Correspondingly, the embodiments of the present application further provide a device for obtaining a payment threshold to ensure the implementation and application of the foregoing method.

To solve the foregoing problem, the present application discloses a method for obtaining a payment threshold, which includes:

obtaining a known first payment threshold of a user at a first moment;
determining a payment threshold variation between a second moment and the first moment according to a pre-obtained payment threshold change rule; and
determining a payment threshold of the user at the second moment according to the first payment threshold and the payment threshold variation,
wherein the payment threshold change rule is obtained after data processing is performed on historical transaction data of the user at different moments.

Further, the process of obtaining the payment threshold change rule includes:

performing first data processing on the historical transaction data of the user at different moments according to a preset rule to obtain a first data sequence;
performing second data processing on the first data sequence to obtain a second data sequence; and
performing a regression analysis on the second data sequence to obtain the payment threshold change rule.

Further, the step of performing first data processing on the historical transaction data of the user at different moments according to a preset rule to obtain a first data sequence includes:

determining a data quantile according to a preset user interruption rate; and
assigning values to the historical transaction data of the user at different moments according to the data quantile to obtain the first data sequence.

Further, the step of performing second data processing on the first data sequence to obtain a second data sequence includes:

performing a difference operation on the first data sequence to obtain a differential sequence; and
performing a Log conversion on the differential sequence to obtain the second data sequence.

Further, the step of performing a regression analysis on the second data sequence to obtain the payment threshold change rule includes:

establishing a regression model according to the second data sequence; and
obtaining the payment threshold change rule according to the regression model when a residual error obeys a normal distribution.

Further, the method further includes:

correcting the payment threshold change rule according to a preset condition.

The embodiments of the present application further disclose a device for obtaining a payment threshold, which includes:

a threshold obtaining unit configured to obtain a known first payment threshold of a user at a first moment;
a variation determination unit configured to determine a payment threshold variation between a second moment and the first moment according to a pre-obtained payment threshold change rule; and
a threshold determination unit configured to determine a payment threshold of the user at the second moment according to the first payment threshold and the payment threshold variation,
wherein the payment threshold change rule is obtained after data processing is performed on historical transaction data of the user at different moments.

Further, the device further includes a rule determination unit configured to obtain the payment threshold change rule, and
the rule determination unit includes:

a first processing subunit configured to perform first data processing on the historical transaction data of the user at different moments according to a preset rule to obtain a first data sequence;
a second processing subunit configured to perform second data processing on the first data sequence to obtain a second data sequence; and
a data analysis subunit configured to perform a regression analysis on the second data sequence to obtain the payment threshold change rule.

Further, the first processing subunit includes:

a determination subunit configured to determine a data quantile according to a preset user interruption rate; and
a value assignment subunit configured to assign values to the historical transaction data of the user at different moments according to the data quantile to obtain the first data sequence.

Further, the second processing subunit includes:

an operation subunit configured to perform a difference operation on the first data sequence to obtain a differential sequence; and
a conversion subunit configured to perform a Log conversion on the differential sequence to obtain the second data sequence.

Further, the data analysis subunit includes:

an establishment subunit configured to establish a regression model according to the second data sequence; and an analysis subunit configured to obtain the payment threshold change rule according to the regression model when a residual error obeys a normal distribution.

Further, the device further includes:

a correction unit configured to correct the payment threshold change rule according to a preset condition.

Compared with the prior art, the embodiments of the present application include the following advantages:

In the embodiments of the present application, a payment threshold change rule is pre-obtained according to historical transaction data of a user, so that during obtaining of a payment threshold, a known historical payment threshold can be automatically obtained and a current payment threshold is obtained by calculation according to a payment threshold change rule, realizing automatic obtaining of the payment threshold. This process does not require an operator to frequently log onto the back-end to frequently interact with a back-end server, thus simplifying a process of obtaining the payment threshold and improving the efficiency of obtaining the payment threshold.

## Brief Description of the Drawings

FIG. 1 is a flowchart of steps of an embodiment of a method for obtaining a payment threshold according to the present application;

FIG. 2 is a flowchart of steps of an embodiment of a method for obtaining a payment threshold change rule according to the present application;

FIG. 3a is a flowchart of steps of an embodiment of a method for obtaining a first data sequence according to the present application;

FIG. 3b is a scatter diagram of a first data sequence according to the present application;

FIG. 4a is a flowchart of steps of an embodiment of a method for obtaining a second data sequence according to the present application;

FIG. 4b is a scatter diagram of a differential sequence according to the present application;

FIG. 4c is a scatter diagram and a regression analysis diagram of a second data sequence according to the present application;

FIG. 5 is a flowchart of steps of an embodiment of a method for obtaining a payment threshold change rule by performing a regression analysis on a second data sequence according to the present application;

FIG. 6 is a structural block diagram of an embodiment of a device for obtaining a payment threshold according to the present application;

FIG. 7 is a structural block diagram of an embodiment of another device for obtaining a payment threshold according to the present application;

FIG. 8 is a structural block diagram of a first processing subunit according to an embodiment of the present application;

FIG. 9 is a structural block diagram of a second processing subunit according to an embodiment of the present application;

FIG. 10 is a structural block diagram of a data analysis subunit according to an embodiment of the present application; and

FIG. 11 is a structural block diagram of an embodiment of another device for obtaining a payment threshold according to the present application.

## Detailed Description of the Embodiments

To make the foregoing objectives, features, and advantages of the present application easier to understand, the present application is described in further detail below with reference to the accompanying drawings and specific implementations.

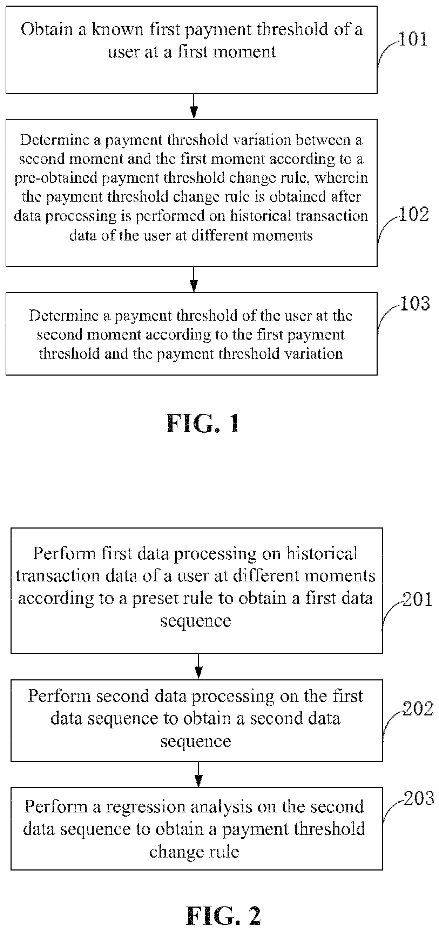

Referring to FIG. 1, a flowchart of steps of an embodiment of a method for obtaining a payment threshold according to the present application is shown, and the method may specifically include the following steps:

Step 101: A known first payment threshold of a user at a first moment is obtained.

A device for obtaining the payment threshold in this embodiment may be a back-end server, or an independent module disposed in the server. The module may interact with other modules, so as to obtain required data from the server.

The device may execute this step after receiving an instruction for obtaining a payment threshold triggered manually or by another device, or may automatically trigger execution of this step according to a preset rule. For example, a validity period of the payment threshold or a time interval for updating the payment threshold may be set in advance. For example, a payment threshold of the day may be updated at a fixed time every day, and when the preset rule is met, the device automatically triggers execution of this step and subsequent steps to obtain a payment threshold. The device may further set a payment threshold according to the obtained payment threshold.

In this step, the device first reads or obtains a payment threshold of the user at the first moment, which is recorded as the first payment threshold, and is actually a known historical payment threshold. Specifically, a payment threshold that is set last time may be read. Definitely, a payment threshold that is set at any historical moment may also be read. The first payment threshold may be set in advance, or may be obtained according to the method of this embodiment. An initial payment threshold of the user may be set by the user or may be obtained according to a particular percentage of a historical transaction amount of the user at that time. The percentage may be 1-p, and p is a user interruption rate.

Step 102: A payment threshold variation between a second moment and the first moment is determined according to a pre-obtained payment threshold change rule, wherein the payment threshold change rule is obtained after data processing is performed on historical transaction data of the user at different moments.

In this embodiment, a payment threshold change rule may be obtained in advance by means of data value assignment, data processing, model analysis, and other processes according to historical transaction data of the user at different moments. In the payment threshold change rule, the current payment threshold is related to transaction data of the user at a particular moment and a time interval between the particular moment and the current moment. For example, $x_{i+1} = x_j + \sum_i^j e^{7.25905 - 0.29872j + \lambda_i}$, where $x_j$ is a payment threshold at a particular moment, i is a natural number, and $\lambda$ is a random number. In this embodiment, the payment threshold change rule may be obtained after data processing and regression analysis are performed on the historical transaction data of the user at different moments. For details, please refer to the description of the embodiments below.

In this step, the device may determine the payment threshold variation between the first moment and the second moment according to the payment threshold change rule, for example, $\sum_i^j e^{7.25905 - 0.29872j + \lambda_i}$.

Step 103: A payment threshold of the user at the second moment is determined according to the first payment threshold and the payment threshold variation.

After the first payment threshold and the payment threshold variation are obtained in the foregoing steps, the payment threshold of the user at the second moment may be obtained according to the payment threshold change rule in this step.

In the embodiment of the present application, a payment threshold change rule is pre-obtained according to historical transaction data of the user, so that during obtaining of a payment threshold, a known historical payment threshold can be automatically obtained and a current payment threshold is obtained by calculation according to a payment threshold change rule, realizing automatic obtaining of the payment threshold. This process does not require an operator to frequently log onto the back-end to frequently interact with a back-end server, thus simplifying a process of obtaining the payment threshold and improving the efficiency of obtaining the payment threshold.

After obtaining the payment threshold, the device may carry out setting according to the payment threshold. By using an example in which Alipay™ is used as a payment tool, a payment threshold for a transaction amount of the user may be set in Alipay™. When a payment amount of the current transaction is equal to or exceeds the payment threshold, the device reminds the user to determine whether to perform the transaction, so as to avoid transaction risks as far as possible.

Moreover, the device may further set a payment threshold update period to obtain the payment threshold regularly or even obtain the payment threshold according to the above steps every day, and adaptively adjust the payment threshold dynamically, thus realizing an objective of flexibly changing a payment strategy. A threshold limit for a risk-control transaction is set by using a dynamic payment threshold, so that transaction risk control can be carried out more accurately and securely, and user experience is also improved.

In the embodiment of the present application, as transaction data of different users may be significantly different and not associated with each other, and therefore different users have different payment threshold change rules respectively. In all transaction scenarios and service scenarios, transaction unit prices may be different. For example, prices for phone bills, Q coins, and game currency are relatively low, and for transfer to cards, the transfer amount is generally over 10,000 yuan. Therefore, in the embodiment of the present application, the historical transaction data of the user may further be processed based on different scenarios to obtain payment threshold change rules in different scenarios. This better reflects the idea of refining data strategies.

As shown in FIG. 2, the process of obtaining the payment threshold change rule in another embodiment of the present application may include:

Step 201: First data processing is performed on the historical transaction data of the user at different moments according to a preset rule to obtain a first data sequence.

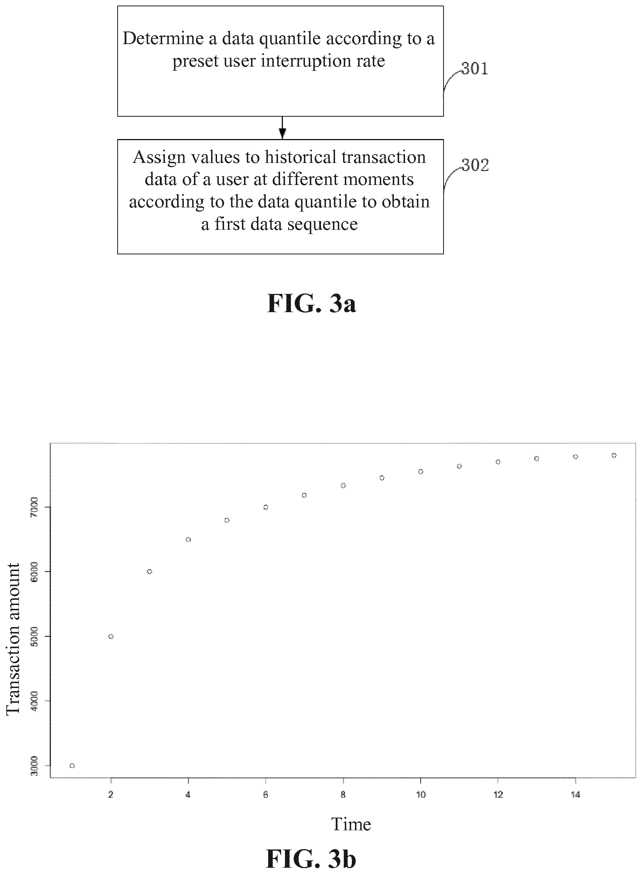

In this embodiment, the first data sequence needs to be obtained first according to the historical transaction data of the user. The first data sequence may directly affect the result of the payment threshold change rule, while a user interruption rate is one of key indexes for evaluating payment experience. The user may feel insecure when there is no interruption, and may have unsmooth product experience when there are too many interruptions. The user interruption rate may be construed as a percentage of the number of interrupted users to the total number of users. Therefore, the first data sequence may be determined with reference to the user interruption rate in this step. As shown in FIG. 3a, the specific process may include:

Step 301: A data quantile is determined according to a preset user interruption rate.

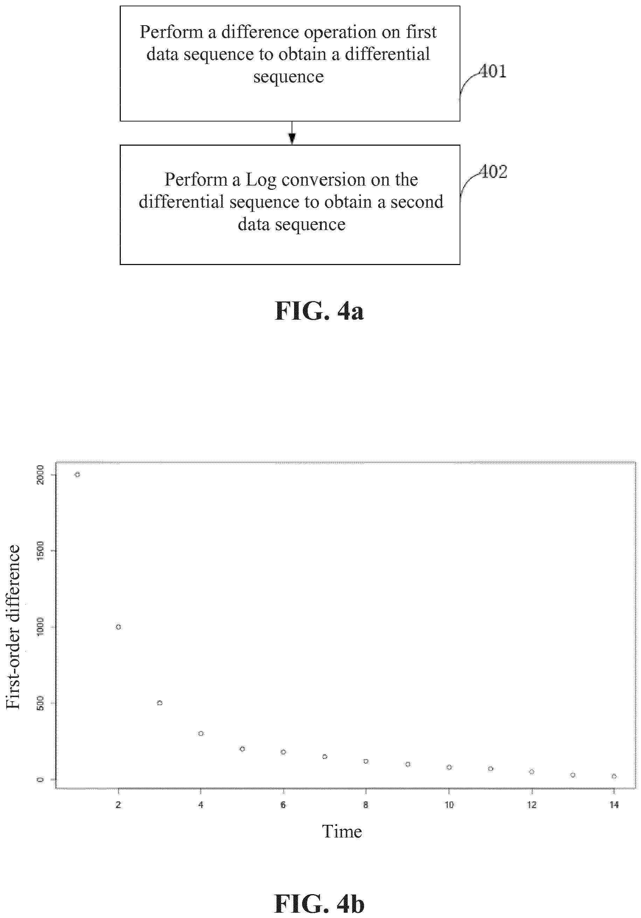

Supposing that the user interruption rate is preset to p, 1-p may be used as the data quantile. For example, if the user interruption rate is 10%, 1-10% may be used as the data quantile.
Step 302: Values are assigned to the historical transaction data of the user at different moments according to the data quantile to obtain the first data sequence.
In this step, 1-p quantiles of the historical transaction data of the user at different moments may be used as the first data sequence. By using an example in which the historical transaction data is a transaction amount, supposing that the transaction amount of the user on the first day is 100 yuan, 100(1-p) is used as data ranked at the first place in the first data sequence; supposing that a transaction amount of the user on the $i^{th}$ day is ai, ai*(1-p) is used as data ranked at the $i^{th}$ place in the first data sequence. The rest can be obtained by analogy, and thus the first data sequence can be obtained. Supposing that the first data sequence is $\{x_i\}$, where $x_i$ is the 1-p quantile of the transaction amount on the $i^{th}$ day, where i=1,...n. A scatter diagram obtained corresponding to the first data sequence is as shown in FIG. 3b, and the sequence is a non-linear sequence.
In other embodiments, the transaction data may not be the transaction amount, but may be the number of transactions, or the like. The user specifically may be a user account, a user bank card, a user equipment, or the like.
Step 202: Second data processing is performed on the first data sequence to obtain a second data sequence.
After the first data sequence is obtained, data processing may be performed on the sequence. Specifically, the processing procedure may be as shown in FIG. 4a, including:

Step 401: A difference operation is performed on the first data sequence to obtain a differential sequence

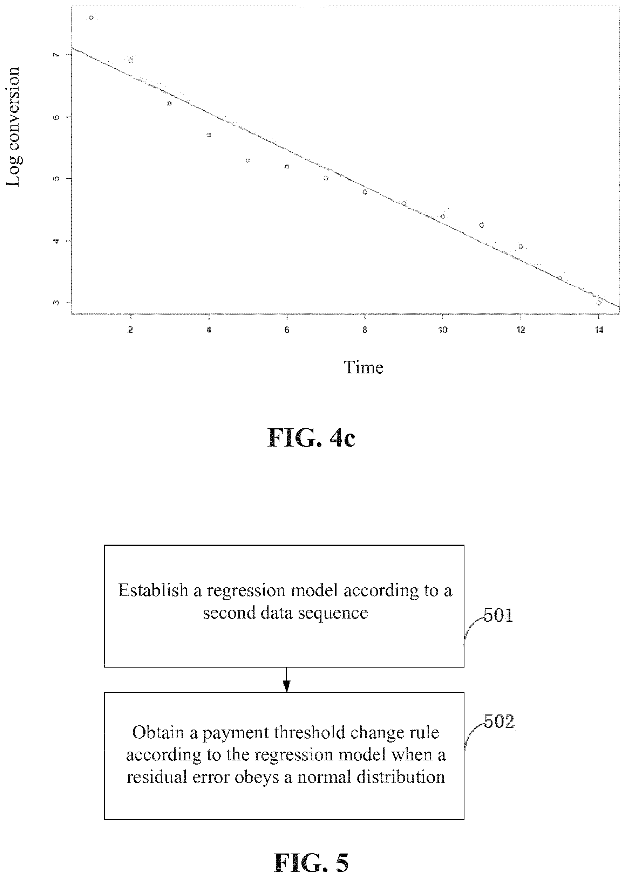

A first-order difference operation may be performed on the first data sequence in this step to obtain a differential sequence.
Supposing that a variable f depends on an independent variable t, when t becomes t+1, the variation of a dependent variable f=f(t) is $D_{f(t)}=f(t+1)-f(t)$, where $D_{f(t)}$ is referred to as a first-order difference of the function f(t) at the point t.
In this step, the first-order difference operation is performed on the first data sequence to obtain a differential sequence $\{y_j\}$, j=1,..., n-1. The differential sequence corresponds to the scatter diagram shown in FIG. 4b.
Step 402: A Log conversion is performed on the differential sequence to obtain a second data sequence.
In this step, the Log conversion is performed on the differential sequence to obtain a second data sequence $\{z_j\}$. FIG. 4c shows a scatter diagram of the second data sequence.
The first-order difference operation and the Log conversion are similar to existing methods, and details are not described herein again.
Step 203: A regression analysis is performed on the second data sequence to obtain the payment threshold change rule.
The process of performing a regression analysis on the second data sequence is as shown in FIG. 5, which may include:

Step 501: A regression model is established according to the second data sequence.

The method of establishing a regression model for the second data sequence $\{z_j\}$ is similar to the existing method. After the regression model is established, a regression line as shown in FIG. 4c may be obtained.
Step 502: The payment threshold change rule is obtained according to the regression model when a residual error obeys a normal distribution.
According to the result of the regression model, a Prob value may be equal to 4.261e-09<0.05, and the residual error obeys the normal distribution. Finally, it is obtained that: $z_j$=7.25905-0.29872j. The residual error $\varepsilon_i$ obeys the distribution N(-0.02786, 0.9486). The payment threshold change rule may be obtained according to the foregoing process:

$$x_{i+1} = x_i + e^{7.25905-0.29872i} = x_1 + \sum_{j=1}^{i} e^{7.25905-0.29872j}, \text{ i=1,..., n.}$$

$x_{i+1}$ is a payment threshold on the (i+1)$^{th}$ day. $x_1$ is the 1-p quantile of the transaction amount on the first day, and this value may also be used as an initial payment threshold of the user.

To make the payment threshold difficult to exceed, herein, a random number $\lambda_i$ is added on the basis of the original payment threshold to finally obtain the payment threshold change rule:

$$x_{i+1} = x_1 + \sum_{j=1}^{i} e^{7.25905-0.29872j+\lambda_j}, \text{ i=1,..., n-1.}$$

The process of obtaining the residual error from the regression model and obtaining the data sequence according to the distribution of the residual error is similar to the existing regression analysis process, and details are not described herein again.

In a specific example, suppose that a first data sequence obtained according to historical transaction amounts of the user at different moments is as follows:

$\{x_1, ..., x_{15}\}$={3000, 5000, 6000, 6500, 6800, 7000, 7180, 7330, 7450, 7550, 7630, 7700, 7750, 7780, 7800}.

First-order differences of the first data sequence are taken to obtain a differential sequence, which is as follows:

$\{y_1, ..., y_{14}\}$={2000, 1000, 500, 300, 200, 180, 150, 120, 100, 80, 70, 50, 30, 20}.

Then, log processing is performed on the differential sequence to obtain a second data sequence, which is as follows:

$\{z_j\}$=log($y_j$)={7.60, 6.91, 6.21, 5.70, 5.30, 5.19, 5.01, 4.79, 4.61, 4.38, 4.25, 3.91, 3.40, 3.00},

j=1,...14

A regression model is established for the second data sequence. When a residual error obeys a normal distribution, it is finally obtained that: $z_j$=7.25905-0.29872j.

In another embodiment of the present application, the method may further include correcting the payment threshold change rule according to a preset condition.

Specifically, after the payment threshold is performed by using the payment threshold change rule, auditing may be carried out regularly (for example, every week) or when a preset condition is met, to obtain scenario auditing data. For example, m users are audited, M users meet an auditing condition (where the condition may be set as required), and the number of uninterrupted users is M*(1-p), where p is the user interruption rate. In this case, a correction amount may be obtained: $ratio = \dfrac{m-M(1-P)}{M(1-P)}$.

After the correction amount is obtained, the first data sequence may be adjusted according to the correction amount. For example, it is set that $x_i'=x_i*(1+rario)$. Then, the foregoing steps 201 to 203 are repeated according to the adjusted first data sequence to obtain a corrected payment threshold change rule.

It should be noted that, to simplify the description, the method embodiment is described as a series of action combinations. However, those skilled in the art should know that the embodiments of the present application are not limited by the described action sequence, because according to the embodiments of the present application, some steps may also be performed in another order or simultaneously. Secondly, those skilled in the art should also know that, the embodiments described in the specification are all preferred embodiments, and the involved actions are not mandatory for the embodiments of the present application.

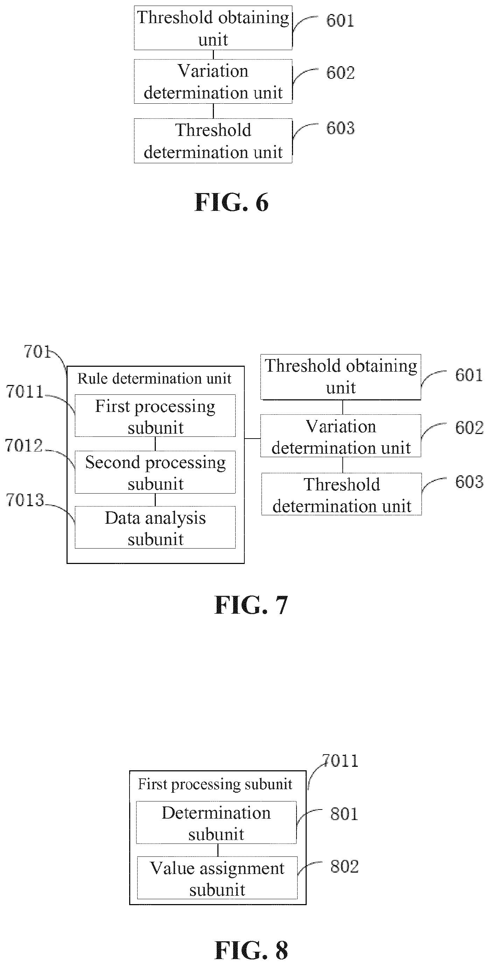

Referring to FIG. 6, a structural block diagram of an embodiment of a device for obtaining a payment threshold according to the present application is shown, and the device may specifically include the following units:

a threshold obtaining unit 601 configured to obtain a known first payment threshold of a user at a first moment;
a variation determination unit 602 configured to determine a payment threshold variation between a second moment and the first moment according to a pre-obtained payment threshold change rule; and
a threshold determination unit 603 configured to determine a payment threshold of the user at the second moment according to the first payment threshold and the payment threshold variation.

The payment threshold change rule is obtained after data processing is performed on historical transaction data of the user at different moments.

By means of the foregoing units, the device can automatically obtain a known historical payment threshold when an instruction is received or a set condition is met, and calculate to obtain a current payment threshold according to a pre-obtained payment threshold change rule, realizing automatic obtaining of the payment threshold. An operator does no need to frequently log onto the back-end to frequently interact with a back-end server, thus improving the efficiency of obtaining a payment threshold.

Moreover, the device may further set a payment threshold setting period to obtain the payment threshold regularly or even every day, and adaptively adjust the payment threshold dynamically, thus realizing an objective of flexibly changing a payment strategy. A threshold limit for a risk-control transaction is set by using a dynamic payment threshold, so that transaction risk control can be carried out more accurately and securely, and user experience can also be improved.

In another embodiment, as shown in FIG. 7, the device further includes a rule determination unit 701 configured to obtain the payment threshold change rule.

The rule determination unit 701 may further include:

a first processing subunit 7011 configured to perform first data processing on the historical transaction data of the user at different moments according to a preset rule to obtain a first data sequence;
a second processing subunit 7012 configured to perform second data processing on the first data sequence to obtain a second data sequence; and
a data analysis subunit 7013 configured to perform a regression analysis on the second data sequence to obtain the payment threshold change rule.

As shown in FIG. 8, the first processing subunit 7011 may include:

a determination subunit 801 configured to determine a data quantile according to a preset user interruption rate; and
a value assignment subunit 802 configured to assign values to the historical transaction data of the user at different moments according to the data quantile to obtain the first data sequence.

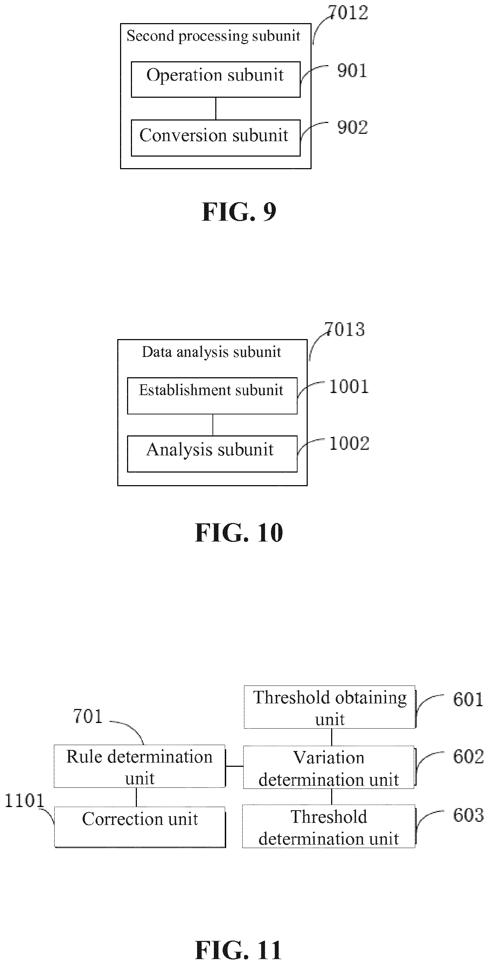

As shown in FIG. 9, the second processing subunit 7012 may include:

an operation subunit 901 configured to perform a difference operation on the first data sequence to obtain a differential sequence; and
a conversion subunit 902 configured to perform a Log conversion on the differential sequence to obtain the second data sequence.

As shown in FIG. 10, the data analysis subunit 7013 may include:

an establishment subunit 1001 configured to establish a regression model according to the second data sequence; and
an analysis subunit 1002 configured to obtain the payment threshold change rule according to the regression model when a residual error obeys a normal distribution.

In another embodiment, as shown in FIG. 11, the device may further include:

a correction unit 1101 configured to correct the payment threshold change rule according to a preset condition.

This embodiment further includes a server, including a memory and a processor.

The processor and the memory are connected through a bus. The bus may be an ISA bus, a PCI bus, an EISA bus, or the like. The bus may be divided into an address bus, a data bus, a control bus, and the like.

The memory may be configured to store a segment of a program. Specifically, the program may include program code, and the program code includes computer operation instructions. The memory may include a high-speed RAM, and may further include a non-volatile memory, for example, at least one magnetic disk memory.

The processor is configured to read the program code in the memory to execute the following steps:

obtaining a known first payment threshold of a user at a first moment;
determining a payment threshold variation between a second moment and the first moment according to a pre-obtained payment threshold change rule; and
determining a payment threshold of the user at the second moment according to the first payment threshold and the payment threshold variation.

The payment threshold change rule is obtained after data processing is performed on historical transaction data of the user at different moments.

The device embodiment is basically similar to the method embodiment, and therefore is described in a relatively simple manner. For related parts, reference may be made to partial description of the method embodiment.

The embodiments in the specification are described progressively. Each embodiment emphasizes a part different from other embodiments. For identical or similar parts of the embodiments, reference may be made to each other.

Those skilled in the art should understand that, the embodiments of the present invention may be provided as a method, a device, or a computer program product. Therefore, the embodiments of the present application may be implemented as a complete hardware embodiment, a complete software embodiment, or an embodiment combining software and hardware. Moreover, the present invention may be a computer program product implemented on one or more computer usable storage media (including, but not limited to, a magnetic disk memory, a CD-ROM, an optical memory, and the like) including computer usable program code.

In a typical configuration, the computer device includes one or more processors (CPU), an input/output interface, a network interface, and a memory. The memory may include a volatile memory, a random access memory (RAM) and/or a non-volatile memory or the like in a computer readable medium, for example, a read-only memory (ROM) or a flash RAM. The memory is an example of the computer readable medium. The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition of this text, the computer readable medium does not include transitory media, such as a modulated data signal and a carrier.

The embodiments of the present application are described with reference to flowcharts and/or block diagrams according to the method, terminal device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of any other programmable processing device to generate a machine, so that the instructions executed by a computer or a processor of any other programmable processing device generate a device for implementing a specified function in one or more processes in the flowcharts and/or in one or more blocks in the block diagrams.

These computer program instructions may also be stored in a computer readable memory that can instruct the computer or any other programmable processing device to work in a particular manner, such that the instructions stored in the computer readable memory generate an artifact that includes an instruction device. The instruction device implements a specified function in one or more processes in the flowcharts and/or in one or more blocks in the block diagrams.

These computer program instructions may also be loaded onto a computer or another programmable data processing device, such that a series of operations and steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

Although preferred embodiments among the embodiments of the present application have been described, once knowing the basic inventive concept, those skilled in the art can make other changes and modifications on these embodiments. Therefore, the appended claims are intended to include the preferred embodiments and all changes and modifications falling in the scope of the embodiments of the present application

Finally, it should be further noted that, the relational terms such as "first" and "second" herein are merely used to differentiate one entity or operation from another, but does not necessarily require or imply the presence of any actual relationship or sequence between these entities or operations. Moreover, the term "include", "comprise" or any other variations thereof are intended to cover non-exclusive inclusion, so that a process, method, article or terminal device including a series of elements not only includes the elements, but also includes other elements not clearly listed, or further includes inherent elements of the process, method, article or terminal device. In a case without any more limitations, an element defined by "including a(n)···" does not exclude that the process, method, article or terminal device including the element further has other identical elements.

A payment threshold setting method and a payment threshold setting device provided in the present application are described in detail above. The principle and implementations of the present application are illustrated by using specific examples herein. The description of the above embodiments is merely used to help understand the method of the present application and the core idea thereof. Meanwhile, those of ordinary skill in the art may make changes on the specific implementations and application scope according to the idea of the present application. In conclusion, the content of the specification should not be construed as limitations on the present application.

## Claims

1. A method for obtaining a payment threshold, comprising:

    obtaining a known first payment threshold of a user at a first moment;
    determining a payment threshold variation between a second moment and the first moment according to a pre-obtained payment threshold change rule; and
    determining a payment threshold of the user at the second moment according to the first payment threshold and the payment threshold variation,
    wherein the payment threshold change rule is obtained after data processing is performed on historical transaction data of the user at different moments.

2. The method of claim 1, wherein the process of obtaining the payment threshold change rule comprises:

    performing first data processing on the historical transaction data of the user at different moments according to a preset rule to obtain a first data sequence;
    performing second data processing on the first data sequence to obtain a second data sequence; and
    performing a regression analysis on the second data sequence to obtain the payment threshold change rule.

3. The method of claim 2, wherein the step of performing first data processing on the historical transaction data of the user at different moments according to a preset rule to obtain a first data sequence comprises:

    determining a data quantile according to a preset user interruption rate; and
    assigning values to the historical transaction data of the user at different moments according to the data quantile to obtain the first data sequence.

4. The method of claim 2, wherein the step of performing second data processing on the first data sequence to obtain a second data sequence comprises:

    performing a difference operation on the first data sequence to obtain a differential sequence; and
    performing a Log conversion on the differential sequence to obtain the second data sequence.

5. The method of claim 2, wherein the step of performing a regression analysis on the second data sequence to obtain the payment threshold change rule comprises:

    establishing a regression model according to the second data sequence; and
    obtaining the payment threshold change rule according to the regression model when a residual error obeys a normal distribution.

**6.** The method of any of claims 1 to 5, further comprising:

correcting the payment threshold change rule according to a preset condition.

**7.** A device for obtaining a payment threshold, comprising:

a threshold obtaining unit configured to obtain a known first payment threshold of a user at a first moment;
a variation determination unit configured to determine a payment threshold variation between a second moment and the first moment according to a pre-obtained payment threshold change rule; and
a threshold determination unit configured to determine a payment threshold of the user at the second moment according to the first payment threshold and the payment threshold variation,
wherein the payment threshold change rule is obtained after data processing is performed on historical transaction data of the user at different moments.

**8.** The device of claim 7, wherein the device further comprises a rule determination unit configured to obtain the payment threshold change rule, and
the rule determination unit comprises:

a first processing subunit configured to perform first data processing on the historical transaction data of the user at different moments according to a preset rule to obtain a first data sequence;
a second processing subunit configured to perform second data processing on the first data sequence to obtain a second data sequence; and
a data analysis subunit configured to perform a regression analysis on the second data sequence to obtain the payment threshold change rule.

**9.** The device of claim 8, wherein the first processing subunit comprises:

a determination subunit configured to determine a data quantile according to a preset user interruption rate; and
a value assignment subunit configured to assign values to the historical transaction data of the user at different moments according to the data quantile to obtain the first data sequence.

**10.** The device of claim 8, wherein the second processing subunit comprises:

an operation subunit configured to perform a difference operation on the first data sequence to obtain a differential sequence; and
a conversion subunit configured to perform a Log conversion on the differential sequence to obtain the second data sequence.

**11.** The device of claim 8, wherein the data analysis subunit comprises:

an establishment subunit configured to establish a regression model according to the second data sequence; and
an analysis subunit configured to obtain the payment threshold change rule according to the regression model when a residual error obeys a normal distribution.

**12.** The device of any of claims 7 to 11, further comprising:

a correction unit configured to correct the payment threshold change rule according to a preset condition.

Obtain a known first payment threshold of a user at a first moment ⟋101

↓

Determine a payment threshold variation between a second moment and the first moment according to a pre-obtained payment threshold change rule, wherein the payment threshold change rule is obtained after data processing is performed on historical transaction data of the user at different moments ⟋102

↓

Determine a payment threshold of the user at the second moment according to the first payment threshold and the payment threshold variation ⟋103

## FIG. 1

Perform first data processing on historical transaction data of a user at different moments according to a preset rule to obtain a first data sequence ⟋201

↓

Perform second data processing on the first data sequence to obtain a second data sequence ⟋202

↓

Perform a regression analysis on the second data sequence to obtain a payment threshold change rule ⟋203

## FIG. 2

Determine a data quantile according to a preset user interruption rate ⟍301

Assign values to historical transaction data of a user at different moments according to the data quantile to obtain a first data sequence ⟍302

# FIG. 3a

Time

# FIG. 3b

Perform a difference operation on first
data sequence to obtain a differential
sequence

401

Perform a Log conversion on the
differential sequence to obtain a second
data sequence

402

## FIG. 4a

## FIG. 4b

**FIG. 4c**

Establish a regression model according to a second data sequence — 501

Obtain a payment threshold change rule according to the regression model when a residual error obeys a normal distribution — 502

**FIG. 5**

```
┌─────────────────────┐
│ Threshold obtaining │ ─ 601
│        unit         │
└─────────────────────┘
           │
┌─────────────────────┐
│      Variation      │ ─ 602
│ determination unit  │
└─────────────────────┘
           │
┌─────────────────────┐
│      Threshold      │ ─ 603
│ determination unit  │
└─────────────────────┘
```

**FIG. 6**

701 ─
7011 ─
7012 ─
7013 ─

```
┌──────────────────────────┐      ┌─────────────────────┐
│ Rule determination unit  │      │ Threshold obtaining │ ─ 601
│ ┌──────────────────────┐ │      │        unit         │
│ │   First processing   │ │      └─────────────────────┘
│ │       subunit        │ │               │
│ └──────────────────────┘ │──────┌─────────────────────┐
│            │             │      │      Variation      │ ─ 602
│ ┌──────────────────────┐ │      │ determination unit  │
│ │  Second processing   │ │      └─────────────────────┘
│ │       subunit        │ │               │
│ └──────────────────────┘ │      ┌─────────────────────┐
│            │             │      │      Threshold      │ ─ 603
│ ┌──────────────────────┐ │      │ determination unit  │
│ │    Data analysis     │ │      └─────────────────────┘
│ │       subunit        │ │
│ └──────────────────────┘ │
└──────────────────────────┘
```

**FIG. 7**

7011 ─

```
┌────────────────────────────┐
│  First processing subunit  │
│ ┌────────────────────────┐ │
│ │     Determination      │ │ ─ 801
│ │        subunit         │ │
│ └────────────────────────┘ │
│            │               │
│ ┌────────────────────────┐ │
│ │   Value assignment     │ │ ─ 802
│ │        subunit         │ │
│ └────────────────────────┘ │
└────────────────────────────┘
```

**FIG. 8**

Second processing subunit /7012

Operation subunit — 901

Conversion subunit — 902

**FIG. 9**

Data analysis subunit /7013

Establishment subunit — 1001

Analysis subunit — 1002

**FIG. 10**

Threshold obtaining unit — 601

701

Rule determination unit

Variation determination unit — 602

1101

Correction unit

Threshold determination unit — 603

**FIG. 11**

# INTERNATIONAL SEARCH REPORT

| International application No. |
|---|
| **PCT/CN2016/085401** |

### A.  CLASSIFICATION OF SUBJECT MATTER

G06Q 20/40 (2012.01) i

According to International Patent Classification (IPC) or to both national classification and IPC

### B.  FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, EPODOC, WPI, CNKI, IEEE: swiping card, upper limit, range, safe value, real time, pay+, deal+, transaction, transfer+, threshold, limit+, saf+, risk, dynamic, real, time, comput+, renew+, refresh +, change, variat+, law, regulat+, trend+, history, predict, efficien+, differen+, regress+, normal+

### C.  DOCUMENTS CONSIDERED TO BE RELEVANT

| Category* | Citation of document, with indication, where appropriate, of the relevant passages | Relevant to claim No. |
|---|---|---|
| A | US 2015142629 A1 (BANK OF AMERICA CORP.), 21 May 2015 (21.05.2015), description, paragraphs [0011]-[0040], and figures 1-3 | 1-12 |
| A | US 2007246528 A1 (FIRST DATA CORP.), 25 October 2007 (25.10.2007), the whole document | 1-12 |
| A | CN 103049851 A (CHINA CONSTRUCTION BANK CORPORATION), 17 April 2013 (17.04.2013), the whole document | 1-12 |
| A | CN 104616137 A (TENCENT TECHNOLOGY SHENZHEN CO., LTD.), 13 May 2015 (13.05.2015), the whole document | 1-12 |
| A | CN 103093348 A (KUANG-CHI INSTITUTE OF ADVANCED TECHNOLOGY et al.), 08 May 2013 (08.05.2013), the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 August 2016 (22.08.2016) | **18 September 2016 (18.09.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MA, Zeyu** Telephone No.: (86-10) **62413958** |

Form PCT/ISA/210 (second sheet) (July 2009)

## INTERNATIONAL SEARCH REPORT
Information on patent family members

International application No.

**PCT/CN2016/085401**

| Patent Documents referred in the Report | Publication Date | Patent Family | Publication Date |
|---|---|---|---|
| US 2015142629 A1 | 21 May 2015 | None | |
| US 2007246528 A1 | 25 October 2007 | WO 2007042062 A1 | 19 April 2007 |
| | | CA 2625907 A1 | 19 April 2007 |
| | | AU 2005337361 A1 | 19 April 2007 |
| | | US 7574402 B2 | 11 August 2009 |
| | | EP 1934902 A1 | 25 June 2008 |
| CN 103049851 A | 17 April 2013 | None | |
| CN 104616137 A | 13 May 2015 | US 2015186880 A1 | 02 July 2015 |
| | | WO 2015096437 A1 | 02 July 2015 |
| CN 103093348 A | 08 May 2013 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201510347516